# FASCICULE DE BREVET EUROPEEN

(11) **EP 2 288 540 B1**
(45) Date de publication et mention de la délivrance du brevet: **21.11.2012**
(21) Numéro de dépôt: 09745992.9
(22) Date de dépôt: 24.04.2009
(51) Int. Cl.: B64D 11/06, B64D 11/00

(54) **DISPOSITIF D'ACCOUPLEMENT A PLATINE DE REGLAGE**
KOPPLUNGSVORRICHTUNG MIT VERSTELLPLATTE
COUPLING DEVICE WITH ADJUSTMENT PLATE

(30) Priorité: 24.04.2008 FR 0802288
(43) Date de publication de la demande: 02.03.2011
(73) Titulaire: Daouk, Antar, 75016 Paris (FR)
(72) Inventeur: Daouk, Antar, 75016 Paris (FR)
(74) Mandataire: Weber, Jean-François
(86) Numéro de dépôt international: PCT/FR2009/050762
(87) Numéro de publication internationale: WO 2009/138673

(56) Documents cités:
- GB-B- 2 406 877
- US-A- 4 062 298
- US-A- 4 185 799
- US-A- 4 496 271
- US-A1- 2005 072 897

## Description

### DOMAINE TECHNIQUE

La présente invention se rapporte au domaine technique général des dispositifs d'accouplement permettant d'attacher de façon amovible un matériel à un rail lui-même embarqué dans un véhicule. En particulier, la présente invention est relative au domaine de l'accouplement rapide de matériels (tels que des sièges, des éléments de cuisine de bord, etc.) à des rails fixés dans des aéronefs tels que les hélicoptères ou les avions.

La présente invention concerne plus particulièrement un dispositif pour accoupler un matériel à un rail embarqué dans un véhicule, ledit dispositif comprenant d'une part un corps principal conçu pour être attaché au rail et d'autre part un organe de liaison attaché au corps principal et conçu pour être relié audit matériel.

### TECHNIQUE ANTERIEURE

Il est connu d'équiper les aéronefs de rails permettant l'attache réversible et rapide de matériels de bord, tels que des sièges, nacelles, éléments de cuisine ou de toilette, etc. En général, les aéronefs sont équipés d'au moins deux rails parallèles de façon à pouvoir attacher un même matériel de bord simultanément à chaque rail pour obtenir une fixation parfaitement stable et rigide. En particulier, les matériels de bord lourds et massifs nécessitent d'être fixés selon un polygone de fixation, et par exemple selon un quadrilatère de fixation avec deux points de fixation situés sur un premier rail et deux autres points de fixation situés sur un deuxième rail parallèle au premier, les quatre points de fixation formant, dans le plan d'extension longitudinal desdits rails, un rectangle. Chaque point de fixation est réalisé à l'aide d'un dispositif d'accouplement rapide qui assure une interface de fixation entre le matériel de bord à installer et le rail.

Un tel dispositif d'accouplement rapide est bien connu dans le domaine, et peut se présenter par exemple sous la forme décrite dans le document FR-2 912 993. Un tel dispositif (souvent appelés « *pied de fixation »* dans le domaine) comporte ainsi d'une part une platine d'attache du matériel de bord, solidarisée à ce dernier par une liaison rigide, par exemple par vissage, et d'autre part un moyen d'ancrage permettant la fixation rapide et réversible du dispositif d'accouplement au rail.

On trouve un autre exemple de l'art antérieur dans le document US 2005/0072897. Un exemple d'installation d'un matériel de bord, en l'espèce un élément de cuisine présentant une forme globale parallélépipédique, va être exposé succinctement dans ce qui suit.

L'élément de cuisine en question comporte une face de fond globalement rectangulaire aux quatre coins de laquelle sont respectivement vissés quatre dispositifs d'accouplement conformes à la description qui précède. Le personnel en charge de l'installation de cet élément de cuisine soulève l'élément de cuisine et vient le positionner sur les rails, de façon que deux pieds de fixation reposent sur un premier rail tandis que les deux autres pieds reposent sur l'autre rail. Le personnel actionne ensuite le moyen d'ancrage de chaque pied, pour solidariser chacun des quatre pieds au rail correspondant et ainsi obtenir une fixation rigide et stable de l'élément de cuisine sur le plancher de la cabine de l'avion.

Une fois cette opération de fixation des pieds sur les rails effectuée, il est fréquent de constater des défauts de niveau et de parallaxe du polygone de fixation, dont les sommets correspondent aux quatre pieds de fixation. En d'autres termes, au lieu de la forme rectangulaire recherchée, le polygone de fixation peut présenter un contour déformé, par exemple de forme trapézoïdale. Dans la direction verticale, des différences de niveau (c'est-à-dire d'altitude) de fixation peuvent être constatées d'un pied à un autre, de sorte que l'élément de cuisine est dans ce cas anormalement penché.

Ces défauts de parallaxe et de niveau engendrent des contraintes mécaniques permanentes qui constituent une menace pour l'intégrité de l'élément de cuisine puisqu'elles peuvent conduire, éventuellement sous l'effet de phénomènes de fatigue mécanique, à une détérioration de l'élément.

Ces défauts de parallaxe et de niveau génèrent également des déformations de la structure de l'élément de cuisine, déformations qui peuvent nuire à la fonctionnalité et/ou à l'intégrité dudit élément.

### EXPOSE DE L'INVENTION

Les objets assignés à l'invention visent par conséquent à porter remède aux différents inconvénients de l'art antérieur mentionnés dans ce qui précède et à proposer un nouveau dispositif pour accoupler un matériel à un rail embarqué dans un véhicule, qui permet de façon particulièrement simple, rapide (sans montages/démontages successifs) et fiable à un utilisateur de corriger un éventuel défaut de positionnement du matériel relativement au rail.

Un autre objet de l'invention vise à proposer un nouveau dispositif pour accoupler un matériel à un rail embarqué dans un véhicule, dont la construction est particulièrement simple, bon marché et robuste.

Un autre objet de l'invention vise à proposer un nouveau dispositif pour accoupler un matériel à un rail embarqué dans un véhicule qui permet à l'utilisateur de régler sans effort, même lorsque le poids du matériel est important, de façon simple et précise le positionnement du matériel relativement au rail.

Un autre objet de l'invention vise à proposer un nouveau dispositif pour accoupler un matériel à un rail embarqué dans un véhicule qui permet un excellent maintien en position du matériel y compris lorsque le rail est embarqué dans un aéronef.

Un autre objet de l'invention vise à proposer un nouveau dispositif pour accoupler un matériel à un rail embarqué dans un véhicule qui met en oeuvre une conception particulièrement simple et économique, avec un minimum de pièces.

Un autre objet de l'invention vise à proposer un nouveau dispositif pour accoupler un matériel à un rail embarqué dans un véhicule qui autorise un réglage fin, précis et intuitif du positionnement du matériel.

Un autre objet de l'invention vise à proposer un nouveau dispositif pour accoupler un matériel à un rail embarqué dans un véhicule qui permet de corriger de façon efficace et rapide n'importe quel défaut de niveau et/ou de parallaxe du matériel.

Les objets assignés à l'invention sont atteints à l'aide d'un dispositif pour accoupler un matériel à un rail embarqué dans un véhicule, ledit dispositif comprenant d'une part un corps principal conçu pour être attaché au rail et d'autre part un organe de liaison attaché au corps principal et conçu pour être relié audit matériel, ledit dispositif étant caractérisé en ce que l'organe de liaison comprend au moins d'une part une première platine montée mobile sur le corps principal et d'autre part un premier moyen de réglage conçu pour ajuster, sous l'effet d'une manipulation du premier moyen de réglage par un utilisateur, la position de la première platine relativement au corps principal.

### DESCRIPTIF SOMMAIRE DES DESSINS

D'autres objets et avantages de l'invention apparaîtront plus en détails à la lecture de la description qui suit, ainsi qu'à l'aide des dessins annexés, donnés à titre purement illustratif et non limitatif, parmi lesquels :
- La figure 1 illustre, selon une vue schématique en perspective, un dispositif pour accoupler un matériel à un rail embarqué dans un avion, conforme à un premier mode de réalisation de l'invention, ledit dispositif étant pourvu d'un organe de liaison comprenant trois platines montées en translation les unes par rapport aux autres, chacune selon une direction différente perpendiculaire aux deux autres directions.
- La figure 2 illustre, selon une vue de dessus, le dispositif de la figure 1.
- La figure 3 est une vue en coupe, selon la ligne A-A de la figure 2, du dispositif représenté aux figures 1 et 2.
- La figure 4 illustre, selon une vue schématique en perspective, un détail de réalisation du dispositif des figures 1 à 3 dans lequel les deuxième et troisième platines ont été omises, pour rendre visible la structure du montage de la première platine relativement au corps principal.
- La figure 5 illustre, selon une vue de dessus, le détail de réalisation de la figure 4.
- La figure 6 illustre, selon une vue schématique en perspective, un détail de réalisation du dispositif des figures 1 à 5 dans lequel seule la troisième platine a été omise, de façon à rendre visible la structure du montage de la deuxième platine relativement à la première platine.
- La figure 7 illustre, selon une vue de dessus, le dispositif de la figure 6.
- La figure 8 illustre, selon une vue schématique en perspective, un dispositif pour accoupler un matériel à un rail embarqué dans un avion, conforme à un second mode de réalisation de l'invention.

### MEILLEURE MANIERE DE REALISER L'INVENTION

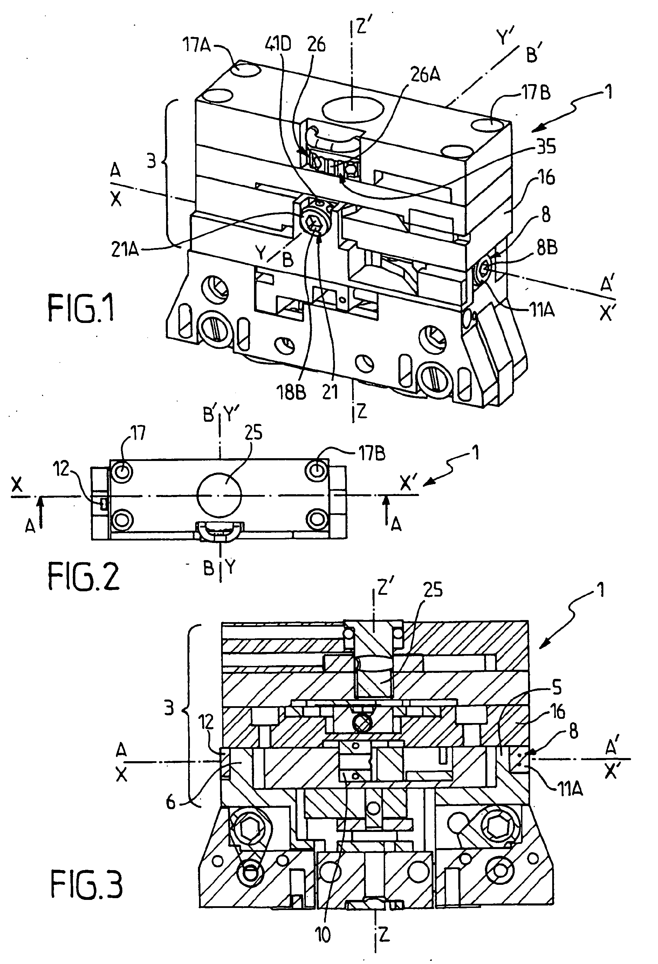

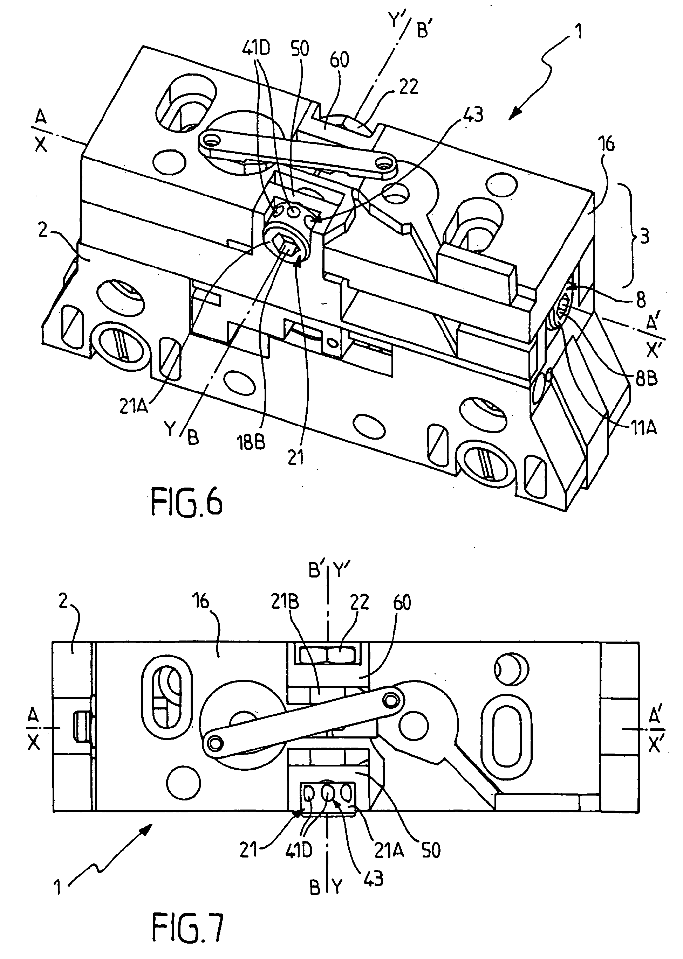

Dans ce qui suit, l'invention sera décrite en rotation avec deux modes de réalisation correspondant respectivement aux figures 1 à 7 d'une part et 8 d'autre part. Des numéros de référence unique seront utilisés pour désigner des pièces fonctionnellement équivalentes dans chacun des modes de réalisation.

L'invention concerne un dispositif 1 pour accoupler un matériel (non illustré) à un rail (non illustré), ledit rail étant embarqué dans un véhicule (non illustré).

De façon préférentielle, le dispositif 1 constitue un dispositif pour accoupler un matériel à un rail embarqué dans un aéronef, tel qu'un avion ou un hélicoptère par exemple. Dans ce qui suit, on fera référence uniquement, pour des raisons de simplicité et de concision de la description, à un dispositif 1 spécifiquement conçu pour être accouplé à un rail embarqué dans un aéronef, étant entendu que l'invention n'est pas limitée à cette application aéronautique préférentielle et peut également être employée sur un véhicule terrestre ou nautique. De préférence, le dispositif 1 est un dispositif d'accouplement rapide, permettant à un utilisateur d'accoupler et de désaccoupler à volonté le dispositif 1 de façon manuelle, à l'aide de sa seule force physique. De préférence, l'utilisateur peut réaliser l'accouplement et le désaccouplement sans outil, en manipulant directement des organes de commande intégrés au pied. Le dispositif 1 est ainsi dans ce cas préférentiel un dispositif à auto-accouplement. De préférence, le rail avec lequel le dispositif 1 d'accouplement est destiné à être accouplé est un rail de type aéronautique, pourvu d'une fente centrale alvéolée comme décrit par exemple dans le document FR-2 912 993. Une telle construction de rail est bien connue en tant que telle, de sorte qu'il n'est pas nécessaire de la décrire plus avant ici.

Le dispositif 1 conforme à l'invention comprend un corps principal 2 conçu pour être attaché au rail par tout moyen d'ancrage connu, conforme par exemple à l'enseignement du document FR-2 893 996 ou FR-2 912 993. Le moyen d'ancrage permet ainsi de réaliser une liaison mécanique d'encastrement entre le corps principal 2 et le rail.

Le dispositif 1 comprend également un organe de liaison 3 attaché au corps principal 2 et conçu pour être relié au matériel à installer. L'organe de liaison 3 forme ainsi une interface de fixation entre le matériel à installer (qui peut être par exemple un bloc de sièges, un élément de cuisine de bord, etc.) dans le véhicule et le corps principal 2 qui lui-même est destiné à être assujetti au rail. Comme évoqué précédemment, l'organe de liaison 3 est monté sur le corps principal 2 et est destiné à être solidarisé, par tout moyen approprié et connu, au matériel que l'on souhaite attacher au rail. Par exemple, le matériel en question peut être relié par vissage à l'organe de liaison 3, et par exemple par vissage dans des trous taraudés 17A, 17B dont est pourvu l'organe de liaison 3.

L'organe de liaison 3 comprend lui-même au moins une première platine 4 montée mobile sur le corps principal 2. En d'autres termes, la première platine 4 est reliée mécaniquement au corps principal 2 de façon à être en permanence solidaire de ce dernier, tout en pouvant se déplacer relativement au corps principal 2.

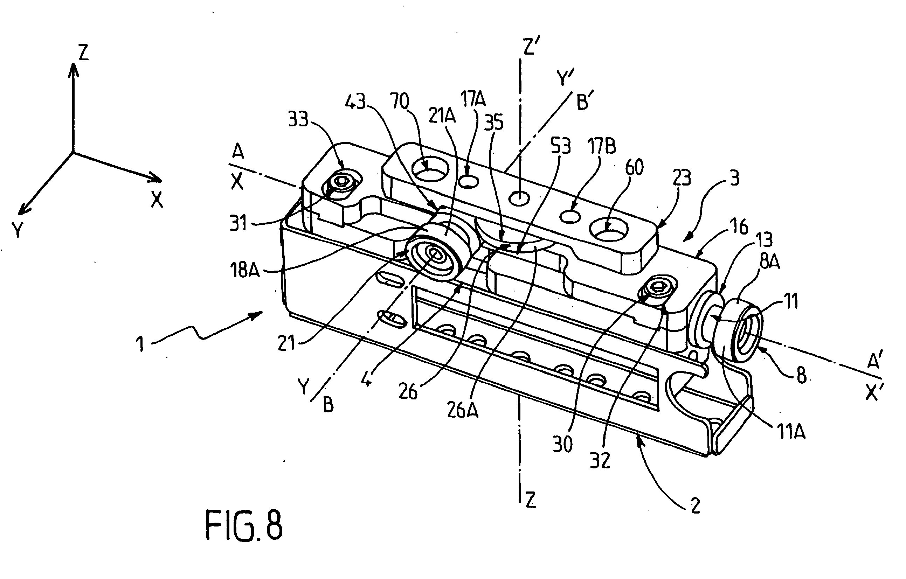

De préférence, la première platine 4 est montée à translation sur le corps principal 2 selon une première direction X-X' (correspondant à l'axe X du repère orthogonal illustré à la figure 8). La première platine 4 est donc dans ce cas montée à coulissement, selon la première direction X-X', sur le corps principal 2, de sorte que la première platine 4 peut ainsi glisser sur et le long du corps principal 2, parallèlement à la première direction X-X'.

Afin de réaliser une telle liaison glissière entre la première platine 4 et le corps principal 2 il est par exemple envisageable que la première platine 4 soit montée sur le corps principal 2 au moyen d'un dispositif de maintien (par exemple constitué de vis de fixation) coulissant dans au moins une lumière 14, 15 pour autoriser le déplacement de la première platine 4 relativement au corps principal 2. D'autres montages mécaniques (à queue d'aronde par exemple) de la première platine 4 sur le corps principal 2 sont toutefois possibles à titre alternatif. Il est également tout à fait envisageable que la liaison mécanique existant entre le corps principal 2 et la première platine 4 autorise plus d'un degré de liberté, sans pour autant que l'on sorte du cadre de l'invention.

De préférence, la première direction X-X' est sensiblement parallèle à la direction d'extension longitudinale du rail lorsque le corps principal 2 est attaché audit rail. La première platine 4 est donc dans ce cas montée à translation longitudinale sur le corps principal 2. La première platine 4 forme de ce fait une platine de réglage dans le sens de la longueur.

Le dispositif 1 conforme à l'invention comprend également au moins un premier moyen de réglage 8 conçu pour ajuster, sous l'effet d'une manipulation du premier moyen de réglage 8 par un utilisateur, la position de la première platine 4 relativement au corps principal 2. Le premier moyen de réglage 8 permet ainsi à un utilisateur de faire varier, de façon précise et contrôlée, la position de la première platine 4 relativement au corps principal 2, et d'immobiliser la première platine 4 relativement au corps principal 2 dans la position choisie par l'utilisateur.

En d'autres termes, le premier moyen de réglage 8 assure une fonction de maintien en position de la première platine 4 relativement au corps principal 2 avec une possibilité de réglage progressif et contrôlé de cette position, ce réglage étant commandé par l'utilisateur par manipulation directe ou indirecte, avec ou sans outil, du premier moyen de réglage 8.

L'utilisateur est ainsi en mesure de mettre en oeuvre la séquence d'opération suivante :
- fixation du dispositif 1 au rail, avec un matériel attaché à l'organe de liaison 3 (par l'intermédiaire des trous taraudés 17A, 17B).
- ajustement précis et contrôlé de la position de la première platine 4 relativement au corps principal 2, par manipulation du premier moyen de réglage 8.

L'invention permet donc d'opérer un réglage fin de la position de la première platine 4, qui permet de parfaire le positionnement du matériel relativement au rail.

Le premier moyen de réglage 8 peut être conçu pour être manipulé directement par l'utilisateur, sans outil. Dans ce cas, qui correspond à la deuxième variante de la figure 8, le premier moyen de réglage 8 comprend une molette 8A destinée à être actionnée directement de façon manuelle par un utilisateur.

Dans la première variante des figures 1 à 7, le premier organe de réglage 8 est conçu pour être manipulé indirectement par l'utilisateur, par l'intermédiaire d'un outil. Par exemple, le premier moyen de réglage 8 comprend dans ce cas une empreinte 8B destinée à accueillir la tête polygonale d'une clé à pans (par exemple une clé à six pans).

Le premier moyen de réglage 8 comprend avantageusement un premier organe fileté 9 rotatif coopérant avec la première platine 4 pour transformer le mouvement rotatif du premier organe fileté 9 en mouvement de la première platine 4, et de préférence en mouvement translatif de la première platine 4 selon la première direction X-X'.

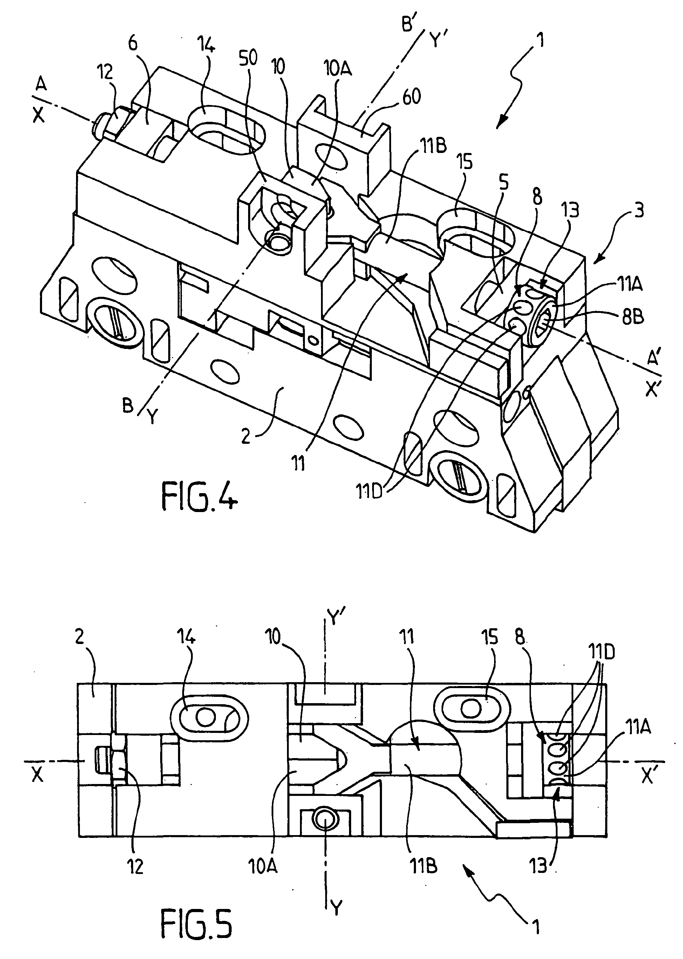

De préférence, le premier organe fileté 9 comprend une première vis de réglage 11 montée à rotation selon son axe longitudinal d'extension A-A' (lequel est parallèle à l'axe X-X' dans la variante illustrée aux figures), de préférence sur le corps principal 2. Comme illustré à la figure 4, la première vis de réglage 11 est avantageusement montée à rotation pure sur le corps principal 2, c'est-à-dire qu'elle possède uniquement la faculté de tourner sur elle-même, selon son axe A-A' et est bloquée en translation. A cet effet, la première vis de réglage 11 est par exemple enfilée à travers deux butées 5, 6 solidaires du corps principal 2 et qui sont disposées respectivement à chaque extrémité du corps principal 2 selon la direction longitudinale X-X'. La première vis de réglage 11 peut librement tourner dans les butées 5, 6, selon une liaison de pivot simple (la première vis de réglage 11 n'est pas vissée dans les butées 5, 6).

La première vis de réglage 11 présente de préférence une tête 11A à partir de laquelle s'étend longitudinalement, selon l'axe A-A', une tige filetée 11 B. La tige filetée 11B s'étend ainsi longitudinalement entre une première extrémité connectée à la tête 11A et une deuxième extrémité libre opposée sur laquelle est vissé un écrou 12 qui empêche, en coopération avec la tête 11 A et les butées 5, 6, la première vis de réglage 11 de se déplacer en translation selon l'axe X-X'. L'écrou 12 n'est toutefois pas serré à fond, de manière à permettre la rotation de la première vis de réglage 11 sur elle-même, selon l'axe A-A', comme exposé précédemment. Bien entendu, les parties de la tige 11 B qui tournent dans les butées 5, 6 sont avantageusement lisses, de manière à permettre une rotation aisée de la première vis de réglage 11 sur elle-même. Comme déjà envisagé plus haut, la tête 11A de la première vis 11 est avantageusement accessible à partir de l'extérieur du dispositif 1 et est par exemple :
- pourvue d'une empreinte 8B polygonale destinée à coopérer avec un outil (du genre clé à six pans) pour permettre à l'utilisateur de faire tourner sur son axe A-A' la première vis 11 (variante des figures 1 à 7).
- ou pourvue d'une molette 8A destinée à être manipulé directement par l'utilisateur pour faire tourner la première vis de réglage 11 sur son axe A-A' (variante de la figure 8).

Afin d'éviter que la position angulaire de la première vis de réglage 11 autour de l'axe A-A' ne soit modifiée intempestivement au fil du temps, notamment sous l'effet des vibrations produites lors du déplacement du véhicule, le premier organe fileté 9 est avantageusement muni d'un système autobloquant 13 qui peut être de toute conception connue de l'homme du métier. Par exemple, dans le cas de la variante des figures 1 à 7, le système autobloquant comprend des concavités 11 D ménagées sur le flanc de la tête de vis 11 A et destinées à coopérer avec un poussoir à bille (non illustré) solidaire du corps principal 2. Ce poussoir à bille permet de générer un effort de blocage qui d'une part est suffisamment important pour empêcher la première vis de réglage 11 de tourner accidentellement (c'est-à-dire en dehors de toute action positive de l'utilisateur à cet effet), mais qui d'autre part est suffisamment faible pour pouvoir être aisément surmonté par un utilisateur désireux de faire tourner manuellement (à l'aide d'une clé à six pans par exemple) la première vis de réglage 11.

Avantageusement, le premier moyen de réglage 8 comprend un premier organe fileté passif 10 solidaire de la première platine 4 et coopérant avec le premier organe fileté 9 rotatif pour transformer le mouvement de ce dernier en mouvement de la première platine 4. Le recours à la coopération d'organes filetés pour régler la position de la première platine 4 relativement au corps principal 2 est particulièrement intéressant en ce qu'il permet un réglage extrêmement progressif et précis, tout en permettant, par l'effet de friction des filets entre eux, une immobilisation parfaite de la platine 4 lorsque le premier moyen de réglage 8 n'est pas sollicité par l'utilisateur. Avantageusement, le premier organe fileté passif 10 comprend un écrou 10A qui d'une part est vissé sur la première vis de réglage 11 et d'autre part est attaché de façon fixe (c'est-à-dire notamment qu'il est bloqué en rotation et ne peut donc pas tourner autour de l'axe A-A') à la première platine 4. De ce fait, une mise en rotation de la première vis 11 grâce à un outil introduit dans l'empreinte 8B permet de transformer le mouvement rotatif de la première vis de réglage 11 en mouvement de translation de l'écrou 10A et donc de la première platine 4, selon l'axe X-X' (lequel est confondu en l'espèce avec l'axe A-A').

Bien entendu, l'invention n'est absolument pas limitée à un dispositif de transformation de mouvement de type vis / écrou, même si un tel système est préféré car il permet à la fois d'assurer un blocage en position de la première platine 4 et un réglage fin de la position de cette dernière.

Avantageusement, l'organe de liaison 3 comprend en outre une deuxième platine 16 montée mobile sur la première platine 4. De préférence, la deuxième platine 16 est montée à translation sur la première platine 4, selon une deuxième direction Y-Y' (correspondant à l'axe Y du repère orthogonal illustré à la figure 8) sensiblement perpendiculaire à la première direction X-X'. Avantageusement, les première et deuxième directions X-X', Y-Y' s'inscrivent dans un plan qui est sensiblement parallèle à la direction d'extension longitudinale du rail lorsque le corps principal 2 est attaché au rail. Dans ce cas de figure, les première et deuxième platines 4, 16 permettent ainsi un réglage du positionnement du matériel dans le plan horizontal, ce qui permet en particulier de corriger d'éventuels défauts de parallaxe de ce dernier. La deuxième platine 16 forme de ce fait une platine de réglage dans le sens de la largeur, défini par la direction transversale Y-Y'.

De préférence, la deuxième platine 16 est montée sur la première platine 4 de la même manière (mais décalée angulairement de 90°) que la première platine 4 est montée sur le corps principal 2. Par exemple, comme cela est visible sur la figure 8, la deuxième platine 16 est montée sur la première platine 4 au moyen d'un dispositif de maintien (comprenant par exemple des vis de fixation 30, 31) coulissant dans au moins une lumière 32, 33 pour autoriser le déplacement de la deuxième platine 16 relativement à la première platine 4.

L'organe de liaison 3 comprend également avantageusement un deuxième moyen de réglage 18 conçu pour ajuster, sous l'effet d'une manipulation du deuxième moyen de réglage 18 par l'utilisateur, la position de la deuxième platine 16 relativement à la première platine 4. Le deuxième moyen de réglage 18 permet ainsi à un utilisateur de faire varier, de façon précise et contrôlée, la position de la deuxième platine 16 relativement à la première platine 4, et d'immobiliser la deuxième platine 16 relativement à la première platine 4 dans la position choisie par l'utilisateur. En d'autres termes, le deuxième moyen de réglage 18 assure une fonction de maintien en position de la deuxième platine 16 relativement à la première platine 4 avec une possibilité de réglage progressif et contrôlé de cette position, ce réglage étant commandé par l'utilisateur par manipulation directe ou indirecte, avec ou sans outil, du deuxième moyen de réglage 18.

Le principe de fonctionnement du deuxième moyen de réglage 18 est de préférence strictement conforme à celui du premier moyen de réglage 8.

Ainsi, le deuxième moyen de réglage 18 comprend avantageusement un deuxième organe fileté 19 rotatif coopérant avec la deuxième platine 16 pour transformer le mouvement rotatif du deuxième organe fileté rotatif 19 en mouvement de la deuxième platine 16, et de préférence en mouvement translatif de la deuxième platine 16 selon la deuxième direction Y-Y'. De préférence, le deuxième organe fileté 19 comprend une deuxième vis de réglage 21 montée à rotation selon son axe longitudinal d'extension B-B' (lequel est parallèle à l'axe Y-Y' dans la variante illustrée aux figures), de préférence sur la première platine 4. La deuxième vis de réglage 21 est avantageusement montée à rotation pure sur la première platine 4, c'est-à-dire qu'elle possède uniquement la faculté de tourner sur elle-même, selon son axe B-B' et est bloquée en translation. A cet effet, la deuxième vis de réglage 21 est par exemple enfilée à travers deux butées 50, 60 solidaires de la première platine 4 et qui sont disposées respectivement à chaque extrémité de la première platine 4 selon la direction transversale Y-Y'. La deuxième vis de réglage 21 peut librement tourner dans les butées 50, 60, selon une liaison de pivot simple (la deuxième vis de réglage 21 n'est pas vissée dans les butées 50, 60).

La deuxième vis de réglage 21 présente de préférence une tête 21A à partir de laquelle s'étend longitudinalement, selon l'axe B-B', une tige filetée 21 B. La tige filetée 21 B s'étend ainsi longitudinalement entre une première extrémité connectée à la tête 21 A et une deuxième extrémité libre opposée sur laquelle est vissé un écrou 22 qui empêche, en coopération avec la tête 21 A et les butées 50, 60, la deuxième vis de réglage 21 de se déplacer en translation selon l'axe Y-Y'. L'écrou 22 n'est toutefois pas serré à fond, de manière à permettre la rotation de la deuxième vis de réglage 21 sur elle-même, selon l'axe B-B', comme exposé précédemment. Bien entendu, les parties de la tige 21 B qui tournent dans les butées 50, 60 sont avantageusement lisses, de manière à permettre une rotation aisée de la deuxième vis de réglage 21 sur elle-même. Comme déjà envisagé plus haut, la tête 21A de la deuxième vis 21 est avantageusement accessible à partir de l'extérieur du dispositif 1 et est par exemple :
- pourvue d'une empreinte 18B polygonale destinée à coopérer avec un outil (du genre clé à six pans) pour permettre à l'utilisateur de faire tourner sur son axe B-B' la deuxième vis 21 (variante des figures 1 à 7).
- ou pourvue d'une molette 18A destinée à être manipulé directement par l'utilisateur pour faire tourner la deuxième vis de réglage 21 sur son axe B-B' (variante de la figure 8).

Afin d'éviter que la position angulaire de la deuxième vis de réglage 21 autour de l'axe B-B' ne soit modifiée intempestivement au fil du temps, notamment sous l'effet des vibrations produites lors du déplacement du véhicule, le deuxième organe fileté 19 est avantageusement muni d'un système autobloquant 43 qui peut être de toute conception connue de l'homme du métier. Par exemple, dans le cas de la variante des figures 1 à 7, le système autobloquant comprend des concavités 41 D ménagées sur le flanc de la tête de vis 21A et destinées à coopérer avec un poussoir à bille (non illustré) solidaire de la première platine 4. Ce poussoir à bille permet de générer un effort de blocage qui d'une part est suffisamment important pour empêcher la deuxième vis de réglage 21 de tourner accidentellement (c'est-à-dire en dehors de toute action positive de l'utilisateur à cet effet), mais qui d'autre part est suffisamment faible pour pouvoir être aisément surmonté par un utilisateur désireux de faire tourner manuellement (à l'aide d'une clé à six pans par exemple) la deuxième vis de réglage 21.

Avantageusement, l'organe de liaison 3 comprend, en outre, une troisième platine 23 montée mobile sur la deuxième platine 16. Avantageusement, la troisième platine 23 est conçue pour être fixée directement au matériel à installer, c'est-à-dire que la troisième platine 23 fait office d'interface de fixation entre ledit matériel et le dispositif 1 d'accouplement. A cet effet, la troisième platine 23 comprend un dispositif d'assemblage, constitué par exemple, comme exposé précédemment, de trous taraudés 17A, 17B pour fixer ledit matériel, en l'occurrence par vissage dans les trous taraudés en question.

De préférence, la troisième platine 23 est montée à translation sur la deuxième platine 16 selon une troisième direction Z-Z' (correspondant à l'axe Z du repère orthogonal illustré à la figure 8) sensiblement perpendiculaire à la première direction X-X' et à la deuxième direction Y-Y'. La troisième platine 23 est donc dans ce cas montée à coulissement, selon la troisième direction Z-Z', sur la deuxième platine 16, de sorte que la troisième platine 23 peut ainsi glisser relativement à la deuxième platine 16, parallèlement à la troisième direction Z-Z'. La troisième platine 23 forme de ce fait une platine de réglage dans le sens de la hauteur.

Afin de réaliser une telle liaison glissière entre la troisième platine 23 et la deuxième platine 16 il est par exemple envisageable que la troisième platine 23 soit montée sur la deuxième platine 16 au moyen d'un dispositif de maintien (par exemple constitué de vis de fixation 60, 70) coulissant dans au moins une lumière pour autoriser le déplacement de la troisième platine 23 relativement à la deuxième platine 16.

Avantageusement, l'organe de liaison 3 comprend en outre un troisième moyen de réglage 35 conçu pour ajuster, sous l'effet d'une manipulation du troisième moyen de réglage 35 par un utilisateur, la position de la troisième platine 23 relativement à la deuxième platine 16. Le troisième moyen de réglage 35 permet ainsi à un utilisateur de faire varier, de façon précise et contrôlée, la position de la troisième platine 23 relativement à la deuxième platine 16, et d'immobiliser la troisième platine 23 relativement à la deuxième platine 16 dans la position choisie par l'utilisateur. En d'autres termes, le troisième moyen de réglage 35 assure une fonction de maintien en position de la troisième platine 23 relativement à la deuxième platine 16 avec une possibilité de réglage progressif et contrôlé de cette position, ce réglage étant commandé par l'utilisateur par manipulation directe ou indirecte, avec ou sans outil, du troisième moyen de réglage 35.

Avantageusement, le troisième moyen de réglage 35 comprend un troisième organe fileté rotatif 26 coopérant avec la troisième platine 23 pour transformer le mouvement rotatif du troisième organe fileté 26 en mouvement translatif de la troisième platine 23 selon la troisième direction Z-Z'. Par exemple, le troisième organe fileté rotatif 26 comprend un écrou 26A monté à rotation relativement à la deuxième platine 16, ledit écrou 26A coopérant en vissage avec une tige filetée 25 solidaire de la troisième platine 23 (et fixe par rapport à cette dernière) de façon à permettre, par un système de transformation de mouvement vis / écrou, d'ajuster finement la position de la troisième platine 23 relativement à la deuxième platine 16 par mise en rotation directe ou indirecte, avec ou sans outil, de l'écrou 26A.

L'écrou 26A est avantageusement accessible à partir de l'extérieur du dispositif 1 et forme par exemple une molette destinée à être manipulé directement par l'utilisateur. Afin d'éviter que la position angulaire du troisième organe fileté 26 ne soit modifiée intempestivement au fil du temps, notamment sous l'effet des vibrations produites lors du déplacement du véhicule, le troisième organe fileté 26 est avantageusement muni d'un système autobloquant 53 qui peut être de toute conception connue de l'homme du métier.

Ainsi, le sous-ensemble formé par le corps principal 2 et l'organe de liaison 3 (lequel incorpore les trois platines 4, 16, 23) forme avantageusement un dispositif de réglage de niveau par translation dans les trois axes x, y et z et de correction de défauts de parallaxe d'un matériel devant être fixé de façon rapide et amovible dans des rails de fixation situé dans un lieu quelconque pouvant être un aéronef.

La description qui suit concerne plus spécialement la variante de la figure 8, mais reste applicable pour l'essentiel à la variante de la figure 1.

Le dispositif 1 comporte un ensemble de trois platines de réglage 4, 16, 23 :
- une platine 4 pour le réglage dans le sens de la longueur,
- une platine 16 pour le réglage dans le sens de la largeur,
- une platine 23 pour le réglage dans le sens de la hauteur,

Les platines 4, 16, 23 sont coulissantes et reliées entre elles par des vis de fixation elles-mêmes coulissant dans les trois axes dans des lumières et dans des trous permettant le guidage de la translation des plaques et le maintien des plaques entre elles. Le réglage dans les trois axes s'effectue au moyen de molettes de réglage munies d'un système autobloquant pour éviter le déréglage des axes. La platine de réglage dans le sens de la longueur coulisse longitudinalement dans une lumière. Cette platine est maintenue dans la position souhaitée au moyen d'une vis de réglage pouvant être une molette munie d'un système autobloquant pour éviter le déréglage de l'axe. La platine de réglage dans le sens de la largeur coulisse latéralement dans une lumière. Cette platine est maintenue dans la position souhaitée au moyen d'une vis de réglage pouvant être une molette munie d'un système autobloquant pour éviter le déréglage de l'axe. La platine de réglage dans le sens de la hauteur coulisse vers le haut ou vers le bas dans une lumière. Cette platine est maintenue dans la position souhaitée au moyen d'une vis de réglage pouvant être une molette munie d'un système autobloquant pour éviter le déréglage de l'axe. Ces trois platines de réglage sont maintenues entre elles par des dispositifs de maintien pouvant être des vis. Les réglages des platines dans le sens de la longueur, de la largeur et de la hauteur peuvent être réalisés en charge et sans outil. D'une part, l'ensemble des trois platines de réglage est relié au matériel devant être fixé dans des rails avions par exemple au moyen de dispositifs d'assemblage. D'autre part, l'ensemble des trois platines de réglage peut être fixé sur un dispositif de fixation dans un rail, pouvant être un dispositif d'accouplement à un rail embarqué dans un véhicule et système correspondant objet du dépôt de brevet N°07/01318 du même inventeur au moyen de vis par exemple. Ainsi, le dispositif 1 comporte une platine de réglage dans le sens de la longueur 4 maintenue à une platine de réglage dans le sens de la largeur 16 maintenue à une platine de réglage dans le sens de la hauteur 23 au moyen de vis épaulées 30, 31, 60, 70. Chaque platine de réglage 4, 16, 23 coulissant dans des lumières 32, 33 est réglable dans un axe x, y ou z au moyen de molettes de réglage (dont sont pourvus les organes filetés 9, 19, 26) munies d'un système autobloquant 13, 43, 53 permettant ainsi de corriger simultanément les niveaux de translation et les défauts de parallaxe du matériel devant être fixé dans les rails d'un lieu quelconque pouvant être un aéronef. L'ensemble des trois platines de réglage 4, 16, 23 est fixé au moyen de vis sur un dispositif d'accouplement (correspondant au corps principal 2) à un rail de fixation. L'ensemble des trois platines de réglage 4, 16, 23 est assemblé au matériel devant être fixé dans des rails avions au moyen de trous taraudés 17A, 17B.

### POSSIBILITE D'APPLICATION INDUSTRIELLE

L'invention trouve son application industrielle dans la conception, la fabrication et l'utilisation de dispositifs d'accouplement.

## Revendications

1. - Dispositif (1) pour accoupler un matériel à un rail embarqué dans un véhicule, ledit dispositif (1) comprenant d'une part un corps principal (2) conçu pour être attaché au rail et d'autre part un organe de liaison (3) attaché au corps principal (2) et conçu pour être relié audit matériel, ledit dispositif (1) étant **caractérisé en ce que** l'organe de liaison (3) comprend au moins d'une part une première platine (4) montée mobile sur le corps principal (2) et d'autre part un premier moyen de réglage (8) conçu pour ajuster, sous l'effet d'une manipulation du premier moyen de réglage (8) par un utilisateur, la position de la première platine (4) relativement au corps principal (2).

2. - Dispositif (1) selon la revendication 1 **caractérisé en ce que** ladite première platine (4) est montée à translation sur le corps principal (2) selon une première direction (X-X').

3. - Dispositif (1) selon la revendication 2 **caractérisé en ce que** la première direction (X-X') est sensiblement parallèle à la direction d'extension longitudinale du rail lorsque le corps principal (2) est attaché audit rail.

4. - Dispositif (1) selon la revendication 3 **caractérisé en ce que** le premier moyen de réglage (8) comprend un premier organe fileté (9) rotatif coopérant avec la première platine (4) pour transformer le mouvement rotatif du premier organe fileté (9) en mouvement translatif de la première platine (4) selon la première direction (X-X').

5. - Dispositif (1) selon la revendication 4 **caractérisé en ce que** le premier organe fileté (9) est muni d'un système autobloquant (13).

6. - Dispositif (1) selon l'une des revendications 1 à 5 **caractérisé en ce que** la première platine (4) est montée sur le corps principal (2) au moyen d'un dispositif de maintien coulissant dans au moins une lumière pour autoriser le déplacement de la première platine (4) relativement au corps principal (2).

7. - Dispositif (1) selon l'une des revendications 1 à 6 **caractérisé en ce que** l'organe de liaison (3) comprend d'une part une deuxième platine (16) montée mobile sur la première platine (4) et d'autre part un deuxième moyen de réglage (18) conçu pour ajuster, sous l'effet d'une manipulation du deuxième moyen de réglage (18) par un utilisateur, la position de la deuxième platine (16) relativement à la première platine (4).

8. - Dispositif (1) selon la revendication 7 **caractérisé en ce que** ladite deuxième platine (16) est montée à translation sur la première platine (4) selon une deuxième direction (Y-Y') sensiblement perpendiculaire à la première direction (X-X').

9. - Dispositif (1) selon la revendication 8 **caractérisé en ce que** le deuxième moyen de réglage (18) comprend un deuxième organe fileté (19) rotatif coopérant avec la deuxième platine (16) pour transformer le mouvement rotatif du deuxième organe fileté (19) en mouvement translatif de la deuxième platine (16) selon la deuxième direction (Y-Y').

10. - Dispositif (1) selon la revendication 9 **caractérisé en ce que** le deuxième organe fileté (19) est muni d'un système autobloquant (43).

11. - Dispositif (1) selon l'une des revendications 7 à 10 **caractérisé en ce que** la deuxième platine (16) est montée sur la première platine (4) au moyen d'un dispositif de maintien (30, 31) coulissant dans au moins une lumière (32, 33) pour autoriser le déplacement de la deuxième platine (16) relativement à la première platine (4).

12. - Dispositif (1) selon l'une des revendications 7 à 11 **caractérisé en ce que** l'organe de liaison (3) comprend d'une part une troisième platine (23) montée mobile sur la deuxième platine (16) et d'autre part un troisième moyen de réglage (35) conçu pour ajuster, sous l'effet d'une manipulation du troisième moyen de réglage (35) par un utilisateur, la position de la troisième platine (23) relativement à la deuxième platine (16).

13. - Dispositif (1) selon la revendication 12 **caractérisé en ce que** ladite troisième platine (23) est montée à translation sur la deuxième platine (16) selon une troisième direction (Z-Z') sensiblement perpendiculaire à la première direction (X-X') et à la deuxième direction (Y-Y').

14. - Dispositif (1) selon la revendication 13 **caractérisé en ce que** le troisième moyen de réglage (35) comprend un troisième organe fileté rotatif (26) coopérant avec la troisième platine (23) pour transformer le mouvement rotatif du troisième organe fileté (26) en mouvement translatif de la troisième platine (23) selon la troisième direction (Z-Z').

15. - Dispositif (1) selon la revendication 14 **caractérisé en ce que** le troisième organe fileté (26) est muni d'un système autobloquant (53).

16. - Dispositif (1) selon l'une des revendications 12 à 15 **caractérisé en ce que** la troisième platine (23) est montée sur la deuxième platine (16) au moyen d'un dispositif de maintien (60, 70) coulissant dans au moins une lumière pour autoriser le déplacement de la troisième platine (23) relativement à la deuxième platine (16).

17. - Dispositif (1) selon l'une des revendications 1 à 15 **caractérisé en ce que** la troisième platine (23) comprend un dispositif d'assemblage (17A, 17B) pour fixer ledit matériel.

18. - Dispositif (1) selon l'une des revendications 1 à 17 **caractérisé en ce qu'**il constitue un dispositif (1) pour accoupler un matériel à un rail embarqué dans un aéronef.

## Claims

1. A device (1) for coupling an equipment to a rail installed on board a vehicle, said device (1) comprising, on the one hand, a main body (2) designed to be attached to the rail, and on the other hand, a connecting member (3) attached to the main body (2) and designed to be connected to said equipment, said device (1) being **characterized in that** the connecting member (3) comprises at least, on the one hand, a first plate (4) movably mounted on the main body (2), and on the other hand, a first adjustment means (8) designed to adjust, through a manipulation of the first adjustment means (8) by a user, the position of the first plate (4) relative to the main body (2).

2. The device (1) according to claim 1, **characterized in that** said first plate (4) is mounted for translation on the main body (2) according to a first direction (X-X').

3. The device (1) according to claim 2, **characterized in that** the first direction (X-X') is substantially parallel to the direction of longitudinal extension of the rail when the main body (2) is attached to said rail.

4. The device (1) according to claim 3, **characterized in that** the first adjustment means (8) comprises a first rotating threaded member (9) cooperating with the first plate (4) to transform the rotational movement of the first threaded member (9) into a translational movement of the first plate (4) according to the first direction (X-X').

5. The device (1) according to claim 4, **characterized in that** the first threaded member (9) is provided with a self-locking system (13).

6. The device (1) according to one of claims 1 to 5, **characterized in that** the first plate (4) is mounted on the main body (2) by means of a holding device sliding in at least one opening to allow the displacement of the first plate (4) relative to the main body (2).

7. The device (1) according to one of claims 1 to 6, **characterized in that** the connecting member (3) comprises, on the one hand, a second plate (16) movably mounted on the first plate (4), and on the other hand, a second adjustment means (18) designed to adjust, through a manipulation of the second adjustment means (18) by a user, the position of the second plate (16) relative to the first plate (4).

8. The device (1) according to claim 7, **characterized in that** said second plate (16) is mounted for translation on the first plate (4) according to a second direction (Y-Y'), which is substantially perpendicular to the first direction (X-X').

9. The device (1) according to claim 8, **characterized in that** the second adjustment means (18) comprises a second rotating threaded member (19) cooperating with the second plate (16) to transform the rotational movement of the second threaded member (19) into a translational movement of the second plate (16) according to the second direction (Y-Y').

10. The device (1) according to claim 9, **characterized in that** the second threaded member (19) is provided with a self-locking system (43).

11. The device (1) according to one of claims 7 to 10, **characterized in that** the second plate (16) is mounted on the first plate (4) by means of a holding device (30, 31) sliding in at least one opening (32, 33) to allow the displacement of the second plate (16) relative to the first plate (4).

12. The device (1) according to one of claims 7 to 11, **characterized in that** the connecting member (3) comprises, on the one hand, a third plate (23) moveably mounted on the second plate (16), and on the other hand, a third adjustment means (35) designed to adjust, through a manipulation of the third adjustment means (35) by a user, the position of the third plate (23) relative to the second plate (16).

13. The device (1) according to claim 12, **characterized in that** the third plate (23) is mounted for translation on the second plate (16) according to a third direction (Z-Z'), which is substantially perpendicular to the first direction (X-X') and the second direction (Y-Y').

14. The device (1) according to claim 13, **characterized in that** the third adjustment means (35) comprises a third rotating threaded member (26) cooperating with the third plate (23) to transform the rotational movement of the third threaded member (26) into a translational movement of the third plate (23) according to the third direction (Z-Z').

15. The device (1) according to claim 14, **characterized in that** the third threaded member (26) is provided with a self-locking system (53).

16. The device (1) according to one of claims 12 to 15, **characterized in that** the third plate (23) in mounted on the second plate (16) by means of a holding device (60, 70) sliding in at least one opening to allow the displacement of the third plate (23) relative to the second plate (16).

17. The device (1) according to one of claims 1 to 15, **characterized in that** the third plate (23) comprises an assembling device (17A, 17B) for fixing said equipment.

18. The device (1) according to one of claims 1 to 17, **characterized in that** it is a device (1) for coupling an equipment to a rail on-board an aircraft.

## Patentansprüche

1. Vorrichtung (1) zum Koppeln eines Materials mit einer in einem Fahrzeug mitgeführten Schiene, wobei die vorrichtung (1) einerseits einen Hauptkörper (2) aufweist, der konzipiert ist, um an der Schiene befestigt zu werden, und andererseits ein Verbindungselement (3), das an dem Hauptkörper (2) befestigt und konzipiert ist, ist um mit dem Material verbunden zu werden, wobei die Vorrichtung (1) **dadurch gekennzeichnet ist, dass** das Verbindungselement (3) mindestens einerseits eine erste Platte (4) aufweist, die beweglich auf den Hauptkörper (2) montiert ist, und andererseits ein erstes Einstellmittel (8), das konzipiert ist, um unter der Einwirkung einer Handhabung des ersten Einstellmittels (8) durch einen Benutzer die Position der ersten Platte (4) in Bezug zum Hauptkörper (2) anzupassen.

2. Vorrichtung (1) nach Anspruch 1, **dadurch gekennzeichnet, dass** die erste Platte (4) auf den Hauptkörper (2) in Verschiebung entlang einer ersten Richtung (X-X') montiert ist.

3. Vorrichtung (1) nach Anspruch 2, **dadurch gekennzeichnet, dass** die erste Richtung (X-X') im Wesentlichen zu der Längsausdehnungsrichtung der Schiene parallel ist, wenn der Hauptkörper (2) an der Schiene befestigt ist.

4. Vorrichtung (1) nach Anspruch 3, **dadurch gekennzeichnet, dass** das erste Einstellmittel (8) ein erstes drehendes Außengewindeelement (9) aufweist, das mit der ersten Platte (4) zusammenarbeitet, um die Drehbewegung des ersten Außengewindeelements (9) in Verschiebungsbewegung der ersten Platte (4) gemäß der ersten Richtung (X-X') umzuwandeln.

5. Vorrichtung (1) nach Anspruch 4, **dadurch gekennzeichnet, dass** das erste Außengewindeelement (9) mit einem selbstblockierenden System (13) versehen ist.

6. Vorrichtung (1) nach einem der Ansprüche 1 bis 5, **dadurch gekennzeichnet, dass** die erste Platte (4) auf den Hauptkörper (2) mittels einer Haltevorrichtung montiert ist, die in mindestens einem Langloch gleitet, um das Bewegen der ersten Platte (4) in Bezug zu dem Hauptkörper (2) zu gestatten.

7. Vorrichtung (1) nach einem der Ansprüche 1 bis 6, **dadurch gekennzeichnet, dass** das Verbindungselement (3) einerseits eine zweite Platte (16), die beweglich auf der ersten Platte (4) montiert ist, und andererseits ein zweites Einstellmittel (18) aufweist, das konzipiert ist, um unter der Einwirkung einer Handhabung des zweiten Einstellmittels (18) durch einen Benutzer die Position der zweiten Platte (16) in Bezug zu der ersten Platte (4) anzupassen.

8. Vorrichtung (1) nach Anspruch 7, **dadurch gekennzeichnet, dass** die zweite Platte (16) in Verschiebung auf der ersten Platte (4) entlang einer zweiten Richtung (Y-Y'), die im Wesentlichen zu der ersten Richtung (X-X') senkrecht steht, montiert ist.

9. Vorrichtung (1) nach Anspruch 8, **dadurch gekennzeichnet, dass** das zweite Einstellmittel (18) ein zweites drehendes Außengewindeelement (19) aufweist, das mit der zweiten Platte (16) zusammenarbeitet, um die Drehbewegung des zweiten Außengewindeelements (19) in Verschiebungsbewegung der zweiten Platte (16) gemäß der zweiten Richtung (Y-Y') umzuwandeln.

10. Vorrichtung (1) nach Anspruch 9, **dadurch gekennzeichnet, dass** das zweite Außengewindeelement (19) mit einem selbstblockierenden System (43) versehen ist.

11. Vorrichtung (1) nach einem der Ansprüche 7 bis 10, **dadurch gekennzeichnet, dass** die zweite Platte (16) auf die erste Platte (4) mittels einer Haltevorrichtung (30, 31) montiert ist, die in mindestens einem Langloch (32, 33) gleitet, um das Verschieben der zweiten Platte (16) in Bezug zu der ersten Platte (4) zu gestatten.

12. Vorrichtung (1) nach einem der Ansprüche 7 bis 11, **dadurch gekennzeichnet, dass** das Verbindungsorgan (3) einerseits eine dritte Platte (23), die beweglich auf der zweiten Platte (16) montiert ist, und andererseits ein drittes Einstellmittel (35) aufweist, das konzipiert ist, um unter der Einwirkung einer Handhabung des dritten Einstellmittels (35) durch einen Benutzer die Position der dritten Platte (23) in Bezug zu der zweiten Platte (16) anzupassen.

13. Vorrichtung (1) nach Anspruch 12, **dadurch gekennzeichnet, dass** die dritte Platte (23) in Verschiebung auf der zweiten Platte (16) gemäß einer dritten Richtung (Z-Z'), die zu der ersten Richtung (X-X') und der zweiten Richtung (Y-Y') im Wesentlichen senkrecht steht, montiert ist.

14. Vorrichtung (1) nach Anspruch 13, **dadurch gekennzeichnet, dass** das dritte Einstellmittel (35) ein drittes drehendes Außengewindeelement (26) aufweist, das mit der dritten Platte (23) zusammenarbeitet, um die Drehbewegung des dritten Außengewindeelements (26) in Verschiebungsbewegung der dritten Platte (23) gemäß der dritten Richtung (Z-Z') umzuwandeln.

15. Vorrichtung (1) nach Anspruch 14, **dadurch gekennzeichnet, dass** das dritte Außengewindeelement (26) mit einem selbstblockierenden System (53) versehen ist.

16. Vorrichtung (1) nach einem der Ansprüche 12 bis 15, **dadurch gekennzeichnet, dass** die dritte Platte (23) auf die zweiten Platte (16) mittels einer Haltevorrichtung (60, 70) montiert ist, die in mindestens einem Langloch gleitet, um die Bewegung der dritten Platte (23) in Bezug zu der zweiten Platte (16) zu gestatten.

17. Vorrichtung (1) nach einem der Ansprüche 1 bis 15, **dadurch gekennzeichnet, dass** die dritte Platte (23) eine Zusammenbauvorrichtung (17A, 17B) zum Befestigen des Materials aufweist.

18. Vorrichtung (1) nach einem der Ansprüche 1 bis 17, **dadurch gekennzeichnet, dass** sie eine Vorrichtung (1) zum Koppeln eines Materials mit einer in einem Luftfahrzeug mitgeführten Schiene bildet.
